Europäisches Patentamt

European Patent Office

Office européen des brevets

(19)

(11) Publication number: **0 027 333**
A1

(12) # EUROPEAN PATENT APPLICATION

(21) Application number: **80303449.5**

(22) Date of filing: **30.09.80**

(51) Int. Cl.³: **B 22 C 1/20**
**B 22 C 1/22, C 08 L 61/10**

(30) Priority: **01.10.79 GB 7934017**

(43) Date of publication of application:
**22.04.81 Bulletin 81/16**

(84) Designated Contracting States:
**BE DE FR GB IT NL**

(71) Applicant: **BORDEN (UK) LIMITED**
**North Baddesley**
**Southampton S05 9ZB(GB)**

(72) Inventor: **Quist, Ingmar Per**
**101 Monmouth Way**
**Llantwit Major South Glamorgan(GB)**

(72) Inventor: **Railton, Jeffrey David**
**12 Bracken Lane**
**Shirley Warren, Southampton(GB)**

(72) Inventor: **Lemon, Peter Herbert Richard Bryan**
**"Pandale" Newton Road**
**Sherfield English, Romsey Hampshire(GB)**

(74) Representative: **Pennant, Pyers et al,**
**Stevens, Hewlett & Perkins 5 Quality Court Chancery**
**Lane**
**London, WC2A 1HZ(GB)**

(54) **Foundry moulding compositions and method of making foundry moulds and cores.**

(57) Lactones, especially gamma-butyrolactone, are used as
curing agents for alkaline phenolic resins in foundry moulds
and cores.

EP 0 027 333 A1

Croydon Printing Company Ltd.

-1-

## FOUNDRY MOULDING COMPOSITIONS AND METHOD OF MAKING FOUNDRY MOULDS AND CORES.

This invention relates to foundry moulding compositions and, more particularly, to foundry moulding compositions which do not evolve pungent acid gases on thermal decomposition. The invention also comprises a process for the production of foundry moulds and cores using said compositions.

Phenol-formaldehyde (PF), phenol-formaldehyde/fur-furyl alcohol-formaldehyde condensation products, catalysed with strong acid catalysts, such as phosphoric acid, sulphuric acid and paratoluene sulphuric acid and the like, are well known as binders for sand in the production of cold-setting foundry moulds and cores. Aromatic sulphonic acids are more commonly employed than all other types but have the disadvantage that pungent fumes of sulphur dioxide are evolved on thermal decomposition.

UF/FA condensation products contain nitrogen which can form ammonia on thermal decomposition and this tends to neutralise the sulphur dioxide. However, nitrogen in the binder can react with certain metals, such as, for example, grey and nodular irons and steel, resulting in the formation of small bubbles in the final casting, a defect known in the foundry industry as "pinholing". The employment of UF/FA binders is consequently restricted.

Phosphoric acid may be employed as a catalyst but tends to build up on the sand on repeated attrition reclamation and this reduces the refractoriness of the sand. Phosphoric acid is also incompatible with PF/FA condensation products and, as a result, the moulds and cores produced exhibit poor bond strengths.

It is known from German Auslegeschrift 1065605 that lactones can act as hardeners for alkaline phenol aldehyde resins. This Auslegeschrift refers to the use of such resins as adhesives in producing wood laminates. U.S. Specification 3599433 suggest the use of similar resin systems applied in dilute aqueous solutions as soil grouts. Neither of these documents suggest any use for such resin systems as foundry binders. This is not surprising because it is very well known in the foundry binder art that cold-setting alkali-curing phenol-aldehyde resins tend to produce weak cores and/or require the use of amine catalysts with the attendant disadvantages referred to above.

We have now surprisingly found that the several disadvantages of the foundry binder compositions of the prior art can be overcome by employing an alkali-catalysed phenolic resin in conjunction with a lactone as a binder for foundry moulding compositions. Such binders can be free from non-metallic elements other than carbon, hydrogen and oxygen and do not evolve pungent acid fumes during thermal decomposition.

Accordingly, the present invention provides a foundry moulding composition comprising a granular refractory material from 0.8 to 5% by weight of the granular refractory material of a binder comprising an alkaline phenolic resin and as a curing agent for the resin from 25 to 110% by weight of the resin of a lactone.

The invention also provides a method of making a foundry mould or core which comprises mixing granular refractory material with from 0.5 to 8 percent by weight on the weight of the refractory material of a binder comprising an alkaline phenolic resin and, as curing agent for the resin, from 25 to 110 percent by weight on the weight of the resin of a lactone, forming the mixture and allowing the mixture to set.

The granular refractory materials used in the present invention may be any of the refractory materials commonly employed in the foundry industry for the production of moulds and cores, such as silica sand, quartz, chromite sand, zircon or olivine sand. The compositions of the invention have the particular advantage that the difficulties commonly associated with the bonding of sands of alkaline reaction, such as olivine and chromite, or beach sands containing shell fragments, and which arise from neutralisation or partial neutralisation of the acid catalyst used, are completely overcome, since in this invention the resin binder is cured under alkaline conditions. The invention is, therefore, of particular utility where it is necessary or desirable to employ alkaline sands.

The phenolic resins used in the present invention are those based upon phenol or substituted phenols, such as phenol,m-cresol,3,5-xylen-1-ol, resorcinol, or mixtures thereof and an aldehyde or mixtures thereof. The preferred materials are phenol and formaldehyde. Part or all of the formaldehyde may be provided in the form of paraformaldehyde (paraform). The molar ratio of the phenol to the aldehyde will typically be from 1:1.0 to 1:3.0 and preferably from 1:1.5 and 1:2.6.

The degree of condensation of the phenolic resin can most conveniently be described in terms of two parameters, the residual solids on heating at $100^{o}$C to constant weight and the viscosity of the solution. The phenolic resins used in the invention typically have solids of between 60 and 95 percent by weight and viscosities within the range 0.5 to 100 poises at $25^{o}$C. The preferred materials are those with solids of from 80 to 95 percent and a viscosity between 5 and 15 poises.

The proportion of alkaline phenolic resin used is from 0.8 to 5.0 percent, preferably from 1.0 to 2.0% by weight on the weight of the sand.

To improve bond strength, it is preferred to add a silane, such as, for example, aminopropyltriethoxy silane, as an adhesion promoter, to the compositions of the invention. The amount of silane employed will typically be up to 3 percent and preferably from 0.1 to 0.5 percent by weight on the weight of the resin.

The alkaline phenolic resin includes an alkali to catalise the curing of the resin. Suitable alkalis include potassium hydroxide, sodium hydroxide, calcium hydroxide, magnesium hydroxide and mixtures thereof. The preferred alkali is potassium hydroxide. Preferably the alkali is included in the resin as an aqueous solution or dispersion, typically containing from 25 to 60% by weight on the weight of the solution or dispersion. For KOH the preferred concentration is about 50% by weight. Typically the amount of alkali used will be in the range 15 to 60% by weight (100% solids basis) on the weight of the resin. The optimum amount in any particular case depends on the nature of the alkali and its concentration and, to some extent, on the nature of the resin and the lactone. By way of example, using a 50% aqueous solution of KOH and a phenolic resin with a solids content of about 80 percent, the amount of alkali will typically be from 15 to 40 percent and optimally between 20 and 30 percent.

The lactone will typically be propiolactone, butyrolactone, caprolactone, or valcrolactone, or a mixture thereof. The preferred lactones are gamma-butyrolactone and caprolactone. Based on the weight of the resin, the proporting of lactone will be from 25 to 110 percent, preferably between 40 and 60 percent by weight on the weight of the resin.

The order of mixing the ingredients is not important but we have found that slightly higher strengths are obtained if the lactone is first mixed with the sand and the phenolic resin containing silane (if used) then added, followed by a solution of alkali.

Immediately after preparation, the mix is discharged into a corebox or pattern mould and allowed to set. The time required for the moulding mixture prepared in this way to solidify may be varied from 2 minutes to 24 hours but we prefer to adjust the setting range to give a setting time within the range 5 to 45 minutes.

The following Examples illustrate the invention.

Preparation of Phenol Formaldehyde Resole Resin

===================================================

42.12 parts by weight of 100% phenol were reacted in a stainless steel reactor with 53.7 parts by weight of 50% aqueous formaldehyde solution at a pH of 8.0 obtained by the addition of 1.5% of 32% caustic solution for 3 hours at $80+/-2^{o}C$. The temperature was dropped to $50-55^{o}C$ by reducing the pressure in the reactor and water distilled off at this temperature to obtain a viscosity of 400 cSt at $25^{o}C$. 0.25 parts by weight of gamma aminopropyl triethoxy silane (A.1102 ex Union Carbide) were added slowly and the resin cooled to $40^{o}C$ and discharged.

Preparation of Foundry Sand Core Mix

=========================================

Unless otherwise stated, the following procedure was employed for the examples which follow. 1000 grammes of the selected sand were charged to a Fordath laboratory coremixer and mixed for 1 minute with 15 grammes of the phenol formaldehyde resin prepared as above. The lactone was then added and mixed for 1 minute. Finally, the alkali was added to the mix and mixed for a further 1 minute. Part of the mix was discharged and rammed into a waxed paper cup which was squeezed by hand to judge when setting occurred. 2" x 2" cylinder compression testpieces were prepared to the standard procedure recommended by I.B.F. Working Party P. (All compression cores were made within 3 minutes of discharge of the mix). Compression cores were placed in a standard atmosphere at $20^{o}$C 50% rh and withdrawn at regular intervals up to ⁻24 hours elapsed time for testing for compression strength.

Effect of Order of Addition of Lactone and Resin

=================================================

Example 1 shows the effects of following the above procedure while Example 2 illustrates the effect, using the same formulation, of adding the lactone to the sand prior to the resin. Similar results are obtained in both cases.

Effect of Proportion and Type of Alkali

==================================================

Example 4 shows that 50 percent caustic soda solution gives higher strengths than 32 percent solution. The setting time can be prolonged by decreasing the proportion added (as can be seen by comparing Examples 3 and 4). By replacing sodium hydroxide by potassium hydroxide longer setting times are obtained but strengths are reduced (Example 5).

However, on increasing the proportion of 50 percent potassium hydroxide solution used, higher strengths are obtained (Examples 6 and 7).

Effect of Proportion and Type of Lactone

=================================================

Caprolactone and valerolactone can be used in place of gamma butyrolactone but slower setting times and lower strengths are obtained (Examples 8 and 9). The optimum percentage of lactone appears to be between 30 and 60% of the resin, 45-50% giving the best strengths (Examples 16,17,18,19).

Effect of Using Alkaline Sands

=================================

Examples 12, 13 and 14 illustrate that the system sets using alkaline sands, such as Southport sea sand, olivine and zircon, and that useable strengths are obtained.

| EXAMPLE | 1 | 2 | 3 | 4 | 5 | 6 | 7 | 8 | 9 |
|---|---|---|---|---|---|---|---|---|---|
| **SAND** | | | | | | | | | |
| Chelford 50 | 400 | 400 | 400 | 400 | 400 | 400 | 400 | 400 | 400 |
| Olivine | - | - | - | - | - | - | - | - | - |
| Southport | - | - | - | - | - | - | - | - | - |
| Zircon | - | - | - | - | - | - | - | - | - |
| Redhill 65 | - | - | - | - | - | - | - | - | - |
| **RESIN** | 6 | 6 | 6 | 6 | 6 | 6 | 6 | 6 | 6 |
| **LACTONE** | | | | | | | | | |
| Gamma-butyro | 2.8 | 2.8 | 2.8 | 2.8 | 2.8 | 2.8 | 2.8 | - | - |
| Capro | - | - | - | - | - | - | - | 2.8 | - |
| Valero | - | - | - | - | - | - | - | - | 2.8 |
| **ALKALI** | | | | | | | | | |
| 32% NaOH | 2.4 | 2.4 | - | - | - | - | - | 2.4 | - |
| 50% NaOH | - | - | 2.0 | 1.6 | - | - | - | - | - |
| 50% KOH | - | - | - | - | 2.0 | 2.4 | 2.8 | - | 3.0 |
| SAND TEMPERATURE °C | 25 | 25 | 22 | 23 | 23 | 24 | 24 | 26 | 23 |
| BENCH LIFE (MIN) | 5 | 5 | 5 | 6 | 9 | 5 | 4 | 22 | 23 |
| SET TIME (MIN) | 10 | 9 | 8 | 10 | 14 | 8 | 6 | 36 | 35 |
| COMPRESSION STRENGTH kN/m$^2$ | | | | | | | | | |
| after 1 hour | 950 | 1280 | 2100 | 1775 | 950 | 1725 | 2000 | 650 | 940 |
| after 2 hours | 1050 | 1820 | 2750 | 2550 | 1330 | 2450 | 3200 | 1825 | 1800 |
| after 4 hours | 1250 | 2050 | 3400 | 3250 | 1775 | 3350 | 4000 | 1975 | - |
| after 24 hours | 3250 | 3750 | 4200 | 4100 | 3200 | 4800 | 5200 | 3550 | 4700 |
| AMBIENT CONDITIONS °C | 24 | 24 | 22 | 22 | 22 | 22 | 22 | 26 | 21 |
| R.H. | 60 | 95 | 55 | 53 | 53 | 53 | 53 | 58 | 59 |
| TEST CONDITIONS °C | 20 | 20 | 20 | 20 | 20 | 20 | 20 | 20 | 20 |
| R.H. | 50 | 50 | 50 | 50 | 50 | 50 | 50 | 50 | 50 |

| EXAMPLE | 10 | 11 | 12 | 13 | 14 | 15 |
|---|---|---|---|---|---|---|
| SAND | | | | | | |
| Chelford 50 | 400 | 400 | - | - | - | 400 |
| Olivine | - | - | 400 | - | - | - |
| Southport | - | - | - | 400 | - | - |
| Zircon | - | - | - | - | 400 | - |
| Redhill 65 | - | - | - | - | - | - |
| RESIN | 6 | 6 | 6 | 6 | 6 | 6 |
| LACTONE | | | | | | |
| Gamma-butyro | 1.4 | - | 1.4 | 1.4 | 1.4 | 1.0 |
| Capro | 1.4 | 2.8 | 1.4 | 1.4 | 1.4 | 1.0 |
| Valero | - | - | - | - | - | - |
| ALKALI | | | | | | |
| 32% NaOH | - | - | - | - | - | - |
| 50% NaOH | - | - | - | - | - | - |
| 50% KOH | 2.4 | 2.8 | 2.8 | 2.8 | 2.8 | 3.0 |
| SAND TEMPERATURE °C | 26 | 22 | 23 | 23 | 23 | 23 |
| BENCH LIFE (MIN) | 8 | 8 | 4 | 7 | 4 | 9 |
| SET TIME (MIN) | 14 | 13 | 8 | 12 | 6 | 14 |
| COMPRESSION STRENGTH $kN/m^2$ | | | | | | |
| after 1 hour | 1185 | 990 | 1750 | 1200 | 4500 | 1975 |
| after 2 hours | 1925 | 1925 | 2250 | 2680 | 3400 | 2400 |
| after 4 hours | 2565 | 3050 | 2600 | 3150 | - | 2900 |
| after 24 hours | 5000 | 4300 | 2600 | 4800 | 10000 | 2900 |
| AMBIENT CONDITIONS °C | 26 | 26 | 25 | 25 | 25 | 22 |
| R.H. | 58 | 53 | 53 | 53 | 53 | 47 |
| TEST CONDITIONS °C | 20 | 20 | 20 | 20 | 20 | 20 |
| R.H. | 50 | 50 | 50 | 50 | 50 | 50 |

| EXAMPLE | 16 | 17 | 18 | 19 | 20 | 21 |
|---|---|---|---|---|---|---|
| SAND | | | | | | |
| Chelford 50 | 400 | 400 | 400 | 400 | - | 400 |
| Olivine | - | - | - | - | - | - |
| Southport | - | - | - | - | - | - |
| Zircon | - | - | - | - | - | - |
| Redhill 65 | - | - | - | - | 400 | - |
| RESIN | 6 | 6 | 6 | 6 | 6 | 6 |
| LACTONE | | | | | | |
| Gamma-butyro | 1.1 | 1.2 | 1.3 | 1.4 | 1.4 | 1.4 |
| Capro | 1.1 | 1.2 | 1.3 | 1.4 | 1.4 | 1.4 |
| Valero | - | - | - | - | - | - |
| ALKALI | | | | | | |
| 32% NaOH | - | - | - | - | - | 2.4 |
| 50% NaOH | - | - | - | - | - | - |
| 50% KOH | 3.0 | 3.0 | 3.0 | 3.0 | 2.8 | - |
| SAND TEMPERATURE °C | 23 | 23 | 23 | 23 | 5 | 25 |
| BENCH LIFE (MIN) | 8 | 7 | 6 | 5 | 7 | 7 |
| SET TIME (MIN) | 13 | 11 | 9 | 7 | 18 | 10 |
| COMPRESSION STRENGTH $kN/m^2$ | | | | | | |
| after 1 hour | 2370 | 2400 | 2400 | 2300 | 1770 | 990 |
| after 2 hours | 3150 | 3250 | 3400 | 3150 | 2760 | 1430 |
| after 4 hours | 3750 | 3700 | 3850 | 3900 | 3500 | 1975 |
| after 24 hours | 4050 | 4300 | 4850 | 4800 | 5130 | 3900 |
| AMBIENT CONDITIONS °C | 22 | 22 | 22 | 22 | 18 | 25 |
| R.H. | 47 | 47 | 47 | 47 | 65 | 48 |
| TEST CONDITIONS °C | 20 | 20 | 20 | 20 | 5 | 20 |
| R.H. | 50 | 50 | 50 | 50 | 72 | 50 |

REMARKS:        * Resin and alkali premixed

CLAIMS

1.      A foundry moulding composition comprising a
granular refractory material from 0.8 to 5% by weight of
the granular refractory material of a binder comprising
an alkaline phenolic resin, and, as curing agent for
the resin, from 25 to 110% by weight of the resin of a
lactone.

2.      A composition as claimed in claim 1 wherein the
granular refractory material is silica sand, quartz,
chromite sand, zircon sand, olivine sand or a mixture
thereof.

3.      A composition as claimed in either claim 1 or claim
2 wherein the phenolic resin is a phenol formaldehyde
resole resin in which the molar ratio of phenol to
formaldehyde is from 1:1 to 1:3.

4.      A composition as claimed in any one of claims 1 to 3
including up to 3% by weight of the resin of at least
one silane.

5.      A composition as claimed in any one of claims 1 to 4
wherein the lactone is one or more of propiolactone,
butyrolactone, valerolactone and caprolactone.

6.      A composition as claimed in claim 5 wherein the
lactone is gamma-butyrolactone.

7.      A method of making a foundry mould or core which
comprises mixing granular refractory material with
from 0.5 to 8 percent by weight on the weight of the
refractory material of a binder comprising an alkaline
phenolic resin and, as curing agent for the resin, from
25 to 110 percent by weight on the weight of the resin
of a lactone, forming the mixture and allowing the
mixture to set.

8.     A method as claimed in claim 7 wherein the granular refractory material is silica sand, quartz, chromite sand, zircon sand, olivine sand or a mixture thereof.

9.     A method as claimed in either claim 7 or claim 8 wherein the phenolic resin is a phenol formaldehyde resole resin in which the molar ratio of phenol to formaldehyde is from 1:1 to 1:3.

10.     A method as claimed in any one of claims 7 to 9 wherein up to 3% by weight of the resin of at least one silane is included in the mixture.

11.     A method as claimed in any one of claims 7 to 10 wherein the lactone is one or more of propiolactone, butyrolactone, valcrolactone and caprolactone.

12.     A method as claimed in claim 11 wherein the lactone is gamma-butyrolactone.

European Patent
Office

**EUROPEAN SEARCH REPORT**

Application number

EP 80 30 3449.5

| DOCUMENTS CONSIDERED TO·BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | Chemical Abstracts vol. 84, 3 May-17 May 1976 Columbus, Ohio USA T. NAKAZAWA et al. "Sodium phenolate resin and organic esters in mold preparations" page 217, column 2, abstract no. 125183c & JP - A - 75 - 130627 | 1,6,12 | B 22 C 1/20 B 22 C 1/22 C 08 L 61/10 |
| | -- | | **TECHNICAL FIELDS SEARCHED (Int. Cl.3)** |
| A,D | DE - B - 1 065 605 (BASF) * claim * | 1 | |
| | -- | | |
| A,D | US - A - 3 599 433 (SUMITOMO DUREZ CO.) * claim 1 * | 3,9 | B 22 C 1/00 C 08 K 5/00 C 08 L 61/00 |
| | ---- | | |

CATEGORY OF
CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

| X | The present search report has been drawn up for all claims | | |
|---|---|---|---|
| Place of search Berlin | Date of completion of the search 20-01-1981 | Examiner GOLDSCHMIDT | |

EPO Form 1503.1 06.78